# EUROPEAN PATENT APPLICATION

(11) **EP 4 141 073 A1**
(43) Date of publication of application: **01.03.2023**
(21) Application number: 21194111.7
(22) Date of filing: 31.08.2021
(51) Int. Cl.: C08L 69/00, C08L 67/02, C08L 23/06, C08L 23/08, C08K 3/04

(54) **FILLED CONDUCTIVE COMPOSITIONS WITH IMPROVED CONDUCTIVITY**

(71) Applicant: SHPP Global Technologies B.V., 4612 PX Bergen op Zoom (NL)
(72) Inventor: GUO, Mingcheng, Shanghai (CN); ZHANG, Shen, Shanghai (CN); WANG, Qin, Shanghai (CN); ZHU, Changjiang, Shanghai (CN)
(74) Representative: Dehns

(57) **Abstract**

Disclosed herein are compositions comprising: from about 30 wt.% to 90 wt.% of polymer component comprising a polycarbonate polymer or a polycarbonate and polyester polymer blend; from about 1 wt.% to 10 wt.% of a dispersing agent; from about 0.01 wt.% to 5 wt.% of a glycidyl group copolymer; and from about 0.5 wt.% to 30 wt.% of an electrically conductive carbon black, wherein the combined weight percent value of all components does not exceed 100 wt.%, and all weight percent values are based on the total weight of the composition. The composition may exhibit a lower surface resistivity compared to a reference composition in the absence of the dispersing agent and glycidyl group copolymer when tested in accordance with ANSI/ESDSTM 11.13 at room temperature.

## Description

### FIELD OF THE DISCLOSURE

The present disclosure relates to filled electrically conductive materials, particularly filled, polycarbonate-based conductive materials.

### BACKGROUND OF THE DISCLOSURE

Conductive materials require different levels of surface resistivity based on different application requirements. The conductive network of filled conductive thermoplastics materials must be effectively maintained to ensure the conductivity of the materials. For example, compositions filled with conductive carbon black may exhibit reduced surface resistivity (SR) with the increased carbon black loading. The increased carbon black may thereby increase matrix viscosity, which may further enhance carbon black dispersion. However, in polymer systems with a lower carbon black loading (for example, less than x weight percent), the matrix viscosity may be lower corresponding to the decrease in carbon black content, thus diminishing carbon black dispersion and ultimately increasing surface resistivity of the material (reduced conductivity). Generally, for filled compositions, especially for those compositions having fillers with a high BET specific surface area (for example, greater than 30 m²/g or greater than 50 m²/g), dispersing agents are used to improve filler dispersion. Conventional dispersion agents however may be incompatible with a given polymer matrix and cannot compensate or alleviate the low matrix viscosity where the conductive filler is below a certain loading. There remains a need in the art for filled thermoplastic compositions that feature an optimal balance between filler dispersion, matrix viscosity, and material conductivity.

Aspects of the present disclosure addresses these and other needs.

### SUMMARY

The above-described and other deficiencies of the art are met by thermoplastic compositions comprising from about 30 wt. % to 90 wt. % of polymer component comprising a polycarbonate polymer or a polycarbonate and polyester polymer blend; from about 1 wt. % to 10 wt. % of a dispersing agent; from about 0.01 wt. % to 5 wt. % of a glycidyl group copolymer; and from about 0.5 wt. % to 30 wt. % of an electrically conductive carbon black, wherein the combined weight percent value of all components does not exceed 100 wt. %, and all weight percent values are based on the total weight of the composition. The composition may exhibit a lower surface resistivity compared to a reference composition in the absence of the dispersing agent and glycidyl group copolymer when tested in accordance with ANSI/ESD STM11.13 TM 11.13 at room temperature.

The above described and other features are exemplified by the following detailed description, examples, and claims.

### DETAILED DESCRIPTION

Polymeric materials requiring higher levels of conductivity generally require a higher loading of conductive filler, while materials configured for less conductivity requirements need a lower filler loading. For filler loaded thermoplastic compositions however the matrix viscosity is diminished where there is less filler, which in turn may negatively influence filler dispersion, and result in unexpectedly low material conductivity. Conventional dispersing agents such as polyethylene wax, paraffin wax or other polymers may be used to improve dispersion. However, given the lack of compatibility of these conventional agents with a given matrix resin, these agents may not sufficiently compensate for the low matrix viscosity where the conductive filler loading is at low level.

Compositions of the present disclosure combine a polymer matrix, suitable dispersing agents, conductive fillers, as well other additional polymers or impact modifiers, to combat the decreased matrix viscosity and to enhance filler dispersion. And, by incorporating a reactive glycidyl group copolymer in polycarbonate (PC) based compositions filler dispersion and conductivity may be similarly improved.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, for example, combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

### Thermoplastic Composition

Aspects of the disclosure relate to a composition comprising thermoplastic composition comprising a polymer component, a dispersing agent, a glycidyl group copolymer; and an electrically conductive carbon black. The thermoplastic polymer component may comprise a polycarbonate, a polyester, or a combination thereof.

In certain aspects, the composition has a surface electrical resistivity that is lower than that of a reference composition in the absence of the dispersing agent and/or glycidyl group copolymer. For example, the composition may have a surface resistivity that is at least 1%, at least 5%, at least 10%, or at least 20% less than the surface resistivity of a reference composition in the absence of the dispersing agent and/or glycidyl group copolymer.

Further disclosed is a component of electronic packaging, such as, for example, a chip tray, carrier tape, among other materials.

### Polymer Component

In an aspect, the composition may comprise a polymer component which may be considered a polymer base resin as other polymers may be present in the composition. In some aspects, the polymer component may comprise a polycarbonate polymer or a polycarbonate and polyester polymer blend.

In further aspects, the thermoplastic resin may comprise a polycarbonate polymer. As used herein, "polycarbonate" refers to an oligomer or polymer comprising residues of one or more dihydroxy compounds, for example, dihydroxy aromatic compounds, joined by carbonate linkages; it also encompasses homopolycarbonates, copolycarbonates, and (co)polyester carbonates. The terms "residues" and "structural units", used in reference to the constituents of the polymers, are synonymous throughout the specification. In various aspects, the polycarbonate may comprise a bisphenol A based polycarbonate.

The terms "BisA," "BPA," or "bisphenol A," which can be used interchangeably, as used herein refers to a compound having a structure represented by the formula: 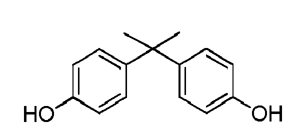 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

In certain aspects, the polycarbonate polymer is a Bisphenol-A polycarbonate, a high molecular weight (Mw) high flow/ductile (HFD) polycarbonate, a low Mw HFD polycarbonate, or a combination thereof. For example, the high flow/ductile polycarbonate may be a polycarbonate that provides very high flow (for example, about 40% greater than conventional polycarbonate), while maintaining the toughness and ductility for flowability that is typical in conventional polycarbonate. Examples of high flow/ductile polycarbonates suitable for use in aspects of the present disclosure include the LEXAN^{™} HFD line of polycarbonates, available from SABIC. For a given melt flow, LEXAN^{™} HFD has about a 10-15 °C lower ductile/brittle transition temperature than conventional PC. In addition, LEXAN^{™} HFD exhibits high ductility at temperatures down to about -40 °F (-40 °C), and processes at temperatures about 20 °F (20 °C) lower than conventional PC having the same ductility.

An example of a bisphenol-A polycarbonate suitable for use in aspects of the disclosure includes, but is not limited to, a PC copolymer (various grades of which are available from SABIC), which includes repeating units derived from BPA and repeating units derived from sebacic acid. In a further aspect, the polycarbonate polymer could be a Bisphenol-A polycarbonate homopolymer, or a blend of the PC Copolymer and the Bisphenol-A polycarbonate homopolymer.

More specifically, a suitable polycarbonate copolymer may comprise repeating units derived from sebacic acid and BPA. Useful polycarbonate copolymers are commercially available and include, but are not limited to, those marketed under the trade names LEXAN^{™} EXL and LEXAN^{™} HFD polymers available from SABIC^{™}. The mechanism for the sebacic acid-based may proceed as shown below.

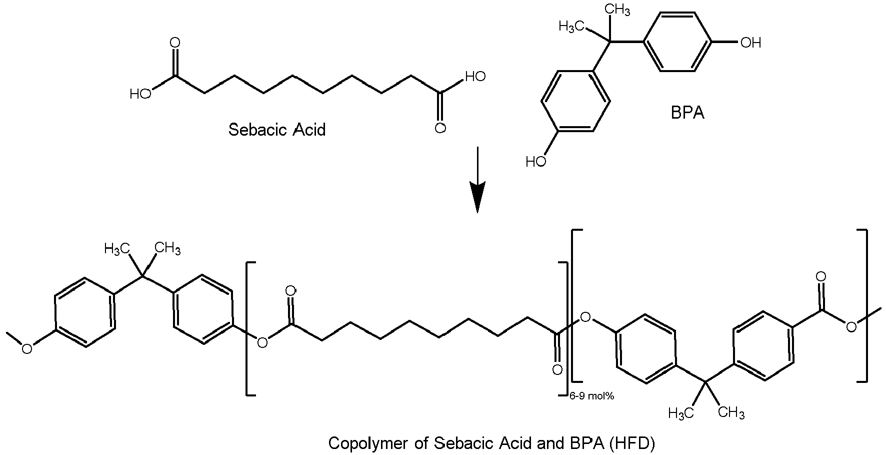

The sebacic acid based PC may provide improved flow and ductility as well as lower processing times while the BPA provides desirable heat performance and modulus properties to provide a copolymer of sebacic acid and BPA. An example of the sebacic acid PC may comprise LEXAN^{™} HFD resin available from SABIC. The polymer component thus may comprise a poly(aliphatic ester)-polycarbonate copolymer comprising soft block aliphatic dicarboxylic acid ester units.

As used herein, "high molecular weight" refers to a molecular weight (Mw) of about 58,000 to about 75,000 grams/mole. As used herein, "low molecular weight" refers to a Mw of about 15,000 to about 58,000 grams/mole, as measured by gel permeation chromatography using BPA polycarbonate standards.

In aspects of the disclosure the thermally conductive composition includes from about 20 wt. % to about 80 wt. % a polycarbonate polymer. In particular aspects the thermally conductive composition includes from about 25 wt. % to about 70 wt. % of a polycarbonate polymer, and in further aspects the thermally conductive composition includes from about 35 wt. % to about 65 wt. % a polycarbonate polymer, or even from about 35 wt. % to about 50 wt. % a polycarbonate polymer.

In various further aspects, "polycarbonates" and "polycarbonate resins" as used herein further include homopolycarbonates, copolymers including different R¹ moieties in the carbonate (referred to herein as "copolycarbonates"), copolymers including carbonate units and other types of polymer units, such as ester units, polysiloxane units, and combinations including at least one of homopolycarbonates and copolycarbonates. As used herein, "combination" is inclusive of blends, mixtures, alloys, reaction products, and the like.

Non-limiting examples of polysiloxane-polycarbonate copolymers can comprise various copolymers available from SABIC. In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 cm3/ 10 min at 300 °C /1.2 kg (see C9030T, a 6 % by weight polysiloxane content copolymer available from SABIC "transparent" EXL C9030T resin polymer). In another example, the polysiloxane-polycarbonate block can comprise 20 % by weight polysiloxane based upon the total weight of the polysiloxane-polycarbonate block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC as the "opaque" EXL C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a cross-linked styrene-divinylbenzene column and calibrated to polycarbonate references using a UV-VIS detector set at 264 nm on 1 mg/ml samples eluted at a flow rate of about 1.0 ml/minute. Moreover, the 20% polysiloxane block copolymer can have a melt volume rate (MVR) at 300 °C/1.2 kg of 7 cm³/ 10 min and can exhibit siloxane domains sized in a range of from about 5 micron to about 20 micrometers (microns, µm).

As provided herein, the thermoplastic composition may comprise a blend of polycarbonate and polyester polymers or a polycarbonate-polyester copolymer.

In various aspects of the present disclosure, the polymer component may comprise a polyester. For example, the thermoplastic composition may comprise a polyalkylene ester (a polyester), such as a polyalkylene terephthalate polymer.

Polyesters have repeating units of the following formula (A): 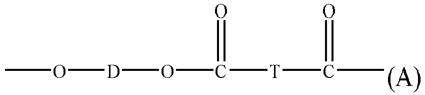 wherein T is a residue derived from a terephthalic acid or chemical equivalent thereof, and D is a residue derived from polymerization of an ethylene glycol, butylene diol, specifically 1,4-butane diol, or chemical equivalent thereof. Chemical equivalents of diacids include dialkyl esters, e.g., dimethyl esters, diaryl esters, anhydrides, salts, acid chlorides, acid bromides, and the like. Chemical equivalents of ethylene diol and butylene diol include esters, such as dialkylesters, diaryl esters, and the like. In addition to units derived from a terephthalic acid or chemical equivalent thereof, and ethylene glycol or a butylene diol, specifically 1,4-butane diol, or chemical equivalent thereof, other T and/or D units can be present in the polyester, provided that the type or amount of such units do not significantly adversely affect the desired properties of the thermoplastic compositions. Poly(alkylene arylates) can have a polyester structure according to formula (A), wherein T comprises groups derived from aromatic dicarboxylates, cycloaliphatic dicarboxylic acids, or derivatives thereof.

Examples of specifically useful T groups include, but are not limited to, 1,2-,1,3-, and 1,4-phenylene; 1,4- and 1,5-naphthylenes; cis- or trans- 1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans- 1,4-(cyclohexylene)dimethylene.

Examples of polyalkylene terephthalate include polyethylene terephthalate (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A useful poly(cycloalkylene diester) is poly(cyclohexanedimethylene terephthalate) (PCT). Combinations including at least one of the foregoing polyesters may also be used.

Copolymers including alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer includes greater than or equal to 50 mol % of poly(ethylene terephthalate), and abbreviated as PCTG where the polymer comprises greater than 50 mol % of poly(1,4-cyclohexanedimethylene terephthalate). Poly(cycloalkylene diester)s can also include poly(alkylene cyclohexanedicarboxylate)s. Of these, a specific example is poly(1,4-cyclohexane- dimethanol-1,4-cyclohexanedicarboxylate) (PCCD), having recurring units of formula (B): 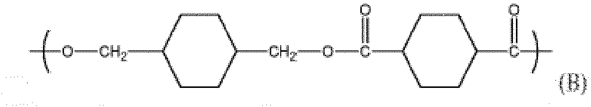 wherein, as described using formula (A), R² is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

In another aspect, the composition can further comprise poly(1,4-butylene terephthalate) or "PBT" resin. PBT may be obtained by polymerizing a glycol component of which at least 70 mol %, preferably at least 80 mol %, consists of tetramethylene glycol and an acid or ester component of which at least 70 mol %, preferably at least 80 mol %, consists of terephthalic acid and/or polyester-forming derivatives thereof. Commercial examples of PBT include those available under the trade names VALOX^{™} 315, VALOX^{™} 195 and VALOX^{™} 176, manufactured by SABIC^{™}, having an intrinsic viscosity of 0.1 deciliters per gram (dl/g) to about 2.0 dl/g (or 0.1 dl/g to 2 dl/g) as measured in a 60:40 phenol/tetrachloroethane mixture or similar solvent at 23 degrees Celsius (°C) to 30° C. In one aspect, the PBT resin has an intrinsic viscosity of 0.1 dl/g to 1.4 dl/g (or about 0.1 dl/g to about 1.4 dl/g), specifically 0.4 dl/g to 1.4 dl/g (or about 0.4 dl/g to about 1.4 dl/g).

Certain aspects of the composition include from about 50 wt. % to about 97 wt. % of a thermoplastic resin, or from about 40 wt. % to about 97 wt. % of a polymer base resin, or from about 55 wt. % to about 97 wt. % of a polymer base resin, or from about 60 wt. % to about 97 wt. % of a polymer base resin, or from about 70 wt. % to about 97 wt. % of a polymer base resin, or from about 40 wt. % to about 95 wt. % of a polymer base resin, or from about 55 wt. % to about 95 wt. % of a polymer base resin, or from about 60 wt. % to about 95 wt. % of a polymer base resin, or from about 75 wt. % to about 97 wt. % of a polymer base resin.

### Conductive Carbon Black

In various aspects, the composition comprises conductive carbon black, a carbon-based filler. Generally, carbon-based fillers may comprise carbon fibers, carbon powder, graphite, graphene, carbon platelets, or carbon nanotubes. As such, the composition may be free of or substantially free of nano carbon, or nanocarbon fiber.

Carbon black may refer to an amorphous form of carbon with a high surfacearea-to-volume ratio. Further, carbon black may include a chemisorbed oxygen complex (such as, carboxylic, quinonic, lactonic, phenolic groups and the like) on its surface to varying degrees, depending on the conditions of manufacture. Carbon black properties such as particle size, structure, and purity may vary depending on the type of carbon black chosen. In one aspect, carbon black can disperse well within the polymer phase, maintain the integrity of its structure or network, and have a consistent particle size. According to certain aspects of the present disclosure, however, the conductive carbon black does not refer to carbon black for colorant purposes.

In one example, the conductive carbon black is an electrically conductive carbon black. The conductive carbon black may be furnace black or acetylene black or an extra conductive carbon black. Conductive carbon black such as furnace black or acetylene black may have a high-volume resistivity within a range of from 1 to 10² Ω-cm. Useful conductive carbon black of the present disclosure may exhibit a BET (Brunauer, Emmett and Teller) specific surface area of about at least 50 meters squared per gram (m²/g) to about 1000 m²/g. In another aspect, the conductive carbon black powder may exhibit an oil absorption number (OAN) from about at least 100 milliliters (ml)/100 gram (g) or at least 150 ml/100g. In a specific aspect, the electrically conductive carbon black comprises an ENSACO^{™} 250 G carbon powder, available from Earache Europe or Imerys Graphite & Carbon Switzerland. In some aspects, the thermoplastic composition may comprise an electrically conductive carbon black having at least one dimension of a particular size. The electrically conductive carbon black may comprise a powder having a particular particle size distribution. For example, the carbon-based filler may have at least one dimension that is less than 100 nm. However, these particles may agglomerate together to have a certain structure and increased aggregate dimensions that may be at a micrometer scale in size.

In some aspects, the electrically conductive carbon black may have a particular diameter. For example, the electrically conductive carbon black may have a primary particle diameter of 10 nanometers to 50 nm. In a yet further aspect, the electrically conductive carbon black may have a DBP absorption amount from about 80 milliliters per 100 grams (ml/100g) to about 500 ml/100 g.

In some aspects, the composition can comprise from about 0.5 wt. % to about 30 wt. % of an electrically conductive carbon black based on the total weight of the thermoplastic composition. The ratio of the polymer component to electrically conductive carbon black may be from about 32:1 to about 6:1 or from about 24:1 to about 6:1. In further aspects the composition may include from about 0.5 wt. % to about 25 wt. %, or from about 0.5 wt. % to about 20 wt. %, or from about 1 wt. % to about 20 wt. %, or from about 3 wt. % to about 30 wt. %, or from about 2 wt. % to about 25 wt. % of an electrically conductive carbon black, or from about 10 wt. % to about 25 wt. % of an electrically conductive carbon black or from about 8 wt. % to about 25 wt. % of an electrically conductive carbon black.

### Dispersing Agent

The disclosed thermoplastic composition may comprise one or more dispersing agents. The dispersing agent may comprise an additive configured to facilitate dispersion of the conductive carbon black throughout the matrix polymer resin (namely, the polymer component). Conventionally, in the absence of a dispersing agent, conductive carbon black dispersion throughout the polymer resin matrix may rely primarily on mechanical shearing or other physical dispersing force. Given the lack of compatibility between a conductive carbon black and a polycarbonate based polymer resin, the conductive carbon black may agglomerate into potentially micrometer sized clusters. Generally, and without wishing to be bound by any particular theory, a dispersing agent may improve the compatibility between the conductive carbon black and the polymer matrix, so as to reduce agglomerates of conductive carbon black thereby increasing dispersion of the filler throughout the composition.

A dispersing agent of the present disclosure may comprise a polyethylene, a polyethylene wax, a paraffin wax, an ethylene-propylene copolymer, an ethylene based olefin copolymer, or a combination thereof. In specific examples, the dispersing agent may comprise a polyethylene (PE), including high-density polyethylene (HDPE), linear low-density polyethylene (LLDPE), low-density polyethylene (LDPE), mid-density polyethylene (MDPE), glycidyl methacrylate modified polyethylene, a maleic anhydride functionalized polyethylene, an ethylene propylene rubber (such as an ethylene-propylene-diene monomer rubber EPDM), or a combination thereof. In a specific example, the dispersing agent comprises a polyethylene such as HDPE.

The dispersing agent may be present in an amount of from about 1 wt. % to about 10 wt. % based on the total weight of the composition, or from about 0.01 wt. % to about 10 wt. %, or from about 0.5 wt. % to about 10 wt. %, or from about 1 wt. % to about 8 wt. %, or from about 0.5 wt. % to about 8 wt. % of the composition.

### Glycidyl Group Copolymer

The disclosed thermoplastic composition may comprise a glycidyl group copolymer. The glycidyl group copolymer may describe a copolymer including repeating units of including an epoxy group attached to a methyl group. In some aspects, the glycidyl group copolymer may comprise an epoxy-functional block copolymer including glycidyl units or including units derived from a C₂₋₂₀ olefin and units derived from a glycidyl (meth)acrylate. These glycidyl units may include glycidyl (meth)acrylate units. In one example, the epoxy-functional block copolymers may further include additional units, for example C₁₋₄ alkyl (meth)acrylate units. In certain aspects, the glycidyl group copolymer comprises ethylene or other olefin block components. It will be recognized that combinations of glycidyl group copolymers may be used. Furthermore, the disclosed glycidyl group copolymers may be compatible with the disclosed dispersing agents.

In one aspect, the glycidyl copolymer may comprise polyethylene blocks, methyl acrylate blocks, and methacrylate blocks. Specific impact modifiers are a co- or terpolymer including units of ethylene, glycidyl methacrylate (GMA), and methyl acrylate. In one example, the glycidyl group copolymer may comprise an ethylene-methyl acrylate-glycidyl methacrylate terpolymer comprising 8 wt. % or about 8 wt. % glycidyl methacrylate units available under the trade name LOTADER^{™} AX8900 from Arkema.

In some aspects, the glycidyl group copolymer may be present in an amount from greater than 0 wt. % to 5 wt. % or from greater than 0.01 wt. % to about 5 wt. %. In further aspects, the glycidyl group copolymer is present in an amount from 0.1 wt. % to 5 wt. % or from about 0.01 wt. % to about 8 wt. %, or from 0.01 wt. % to 7 wt. % or from about 0.01 wt. % to about 4 wt. %, or from 0. 1 wt. % to 4 wt. % based on the total weight of the composition.

In one aspect, the composition is free of or substantially free of a glycidyl group copolymer resin featuring a styrene or a repeating styrene unit.

### Additional Additives

In certain aspects. conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composition mixture. Exemplary additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof. According to certain aspects, the polymer compositions may maintain mechanical performance and dielectric strength even with high levels of fillers (for example, greater than 30 wt. % filler based on the total weight of the polymer composition).

The composition disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composition may comprise a glass fiber filler. For example, the composition may comprise from about 0.01 wt. % to about 25 wt. %, from about 10 wt. % to about 25 wt. %, from about 15 wt. % to about 25 wt. %, of a glass fiber filler based on the total weight of the composition. In yet further aspects, the composition may be free or substantially free of a glass filler.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boronsilicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In some aspects, the thermoplastic composition may comprise a synergist. In various examples fillers may serve as flame retardant synergists. The synergist facilitates an improvement in the flame retardant properties when added to the flame retardant composition over a comparative composition that contains all of the same ingredients in the same quantities except for the synergist. Examples of mineral fillers that may serve as synergists are mica, talc, calcium carbonate, dolomite, wollastonite, barium sulfate, silica, kaolin, feldspar, barytes, or the like, or a combination comprising at least one of the foregoing mineral fillers. Metal synergists, e.g., antimony oxide, can also be used with the flame retardant. In one example, the synergist may comprise magnesium hydroxide and phosphoric acid. The mineral filler may have an average particle size of about 0.1 to about 20 micrometers, specifically about 0.5 to about 10 micrometers, and more specifically about 1 to about 3 micrometers.

The thermoplastic composition can comprise an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidenebisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In various aspects, the thermoplastic composition can comprise a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can comprise a heat stabilizer. As an example, heat stabilizers can include, for example, organo-phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler. The thermoplastic composition can also comprise plasticizers. For example, plasticizers can include phthalic acid esters such as dioctyl-4,5-epoxyhexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB^{™} 5411); 2-hydroxy-4-n-octyloxybenzophenone (CYASORB^{™} 531); 2-[4,6-bis(2,4-dimethylphenyl)-1,3,5-triazin-2-yl]- 5-(octyloxy)-phenol (CYASORB^{™} 1164); 2,2'-(1,4- phenylene)bis(4H-3,1-benzoxazin-4-one) (CYASORB^{™} UV- 3638); 1,3-bis[(2-cyano-3,3-diphenylacryloyl)oxy]-2,2-bis[[(2-cyano-3, 3-diphenylacryloyl)oxy]methyl]propane (UVINUL^{™} 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further comprise a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants can generally be used in amounts of from about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. An antidrip agent, such as TSAN, can be used in amounts of 0.1 to 10 parts by weight, based on 100 parts by weight of the total composition, excluding any filler.

As an example, the disclosed composition can comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the Izod impact) are improved. In some examples, the chemically reactive impact modifier can be an ethylene copolymer with reactive functional groups selected from, but not limited to, anhydride, carboxyl, hydroxyl, and epoxy.

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0° C. In certain aspects, the glass transition temperature (T_{g}) can be less than -5° C, -10° C, -15° C, with a T_{g} of less than -30° C typically providing better performance. Representative rubbery impact modifiers can include, for example, functionalized polyolefin ethylene-acrylate terpolymers, such as ethylene-acrylic estersmaleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

### Properties and Articles

In certain aspects, the disclosed compositions may exhibit certain conductivity properties. A molded article or plaque comprising the composition may exhibit a lower surface resistivity compared to a reference composition in the absence of the dispersing agent and glycidyl group copolymer when tested in accordance with ANSI/ESD STM11.13. The composition may have a surface resistivity that is at least 1%, at least 5%, at least 10%, at least 20% less than the surface resistivity of a reference composition in the absence of the dispersing agent and/or glycidyl group copolymer.

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric strength. In various aspects, the compositions may be useful for as well as electrically conducting purposes.

The advantageous characteristics of the compositions disclosed herein can make them appropriate for an array of uses including, for example, electronic packaging, such as, a chip tray, carrier tape, among other materials.

### Methods for Making the Composition

Aspects of the disclosure further relate to methods for making a composition including a thermoplastic polymer component. In many aspects, the compositions can be prepared according to a variety of methods. The compositions of the present disclosure can be blended, compounded, or otherwise combined with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods can include, but is not limited to, co-rotating and counter-rotating extruders, single screw extruders, co-kneaders, disc-pack processors and various other types of extrusion equipment. In a further aspect, the extruder is a twin-screw extruder. In various further aspects, the composition can be processed in an extruder at temperatures from about 180 °C to about 350 °C, particularly 250 °C to 300 °C.

Methods may further comprise processing the composition to provide a plaque of a desired thickness. Plaques can be extruded, injection molded, compression molded or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composition.

Various combinations of elements of this disclosure are encompassed by this disclosure, e.g., combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application. Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Aspects of the Disclosure

The present disclosure pertains to and includes at least the following aspects.
Aspect 1. A composition comprising: from about 30 wt. % to 90 wt. % of polymer component comprising a polycarbonate polymer or a polycarbonate and polyester polymer blend; from about 1 wt. % to 10 wt. % of a dispersing agent; from about 0.01 wt. % to 5 wt. % of a glycidyl group copolymer; and from about 0.5 wt. % to 30 wt. % of an electrically conductive carbon black; wherein the composition exhibits a lower surface resistivity compared to a reference composition in the absence of the dispersing agent and glycidyl group copolymer when tested in accordance with ANSI/ESD STM11.13 at room temperature; wherein the combined weight percent value of all components does not exceed 100 wt. %, and all weight percent values are based on the total weight of the composition.
Aspect 2. The composition of aspect 1, wherein the polymer component comprises the polycarbonate and polyester polymer blend and the polyester is present in the composition with an amount from about 0.01 wt. % to about 20 wt. %.
Aspect 3. The composition of any one of aspects 1-2, wherein the polymer component comprises a bisphenol A polycarbonate, a polyester carbonate copolymer, a polycarbonate-polysiloxane copolymer or a combination thereof.
Aspect 4. The composition of any one of aspects 1-2, wherein the polymer component comprises a poly(aliphatic ester)-polycarbonate copolymer comprising soft block aliphatic dicarboxylic acid ester units.
Aspect 5. The composition of any one of aspects 1-4, wherein the polymer component further comprises a polyalkylene terephthalate polymer.
Aspect 6. The composition of any one of aspects 1-5, wherein the dispersing agent comprises a polyethylene, a polyethylene wax, a paraffin wax, an ethylene-propylene copolymer, an ethylene acrylate copolymer, an ethylene based olefin copolymer, or a combination thereof.
Aspect 7. The composition of any one of aspects 1-5, wherein the glycidyl group copolymer comprises ethylene-co-glycidyl methacrylate), ethylene-methyl acrylate with glycidyl methacrylate, ethylene/butyl acrylate/glycidyl methacrylate copolymer, or a combination thereof.
Aspect 8. The composition of any one of aspects 1-7, wherein the electrically conductive carbon powder has a BET specific surface area (SSA) of at least 50 (m²/g) or an oil absorption number (OAN) as determined according to ASTM D2414 of at least 100 (mL/100g).
Aspect 9. The composition of any one of aspects 1-8, wherein the composition further comprises an impact modifier comprising: an ACR (acrylic rubber) type of impact modifier; an MBS (methylmethacrylate-butadiene-styrene terpolymer) type of impact modifier; an SBS (styrene butadiene styrene) or SEBS (styrene-ethylene-butylene-styrene) type of impact modifier; a polyester ether elastomer; EPR (ethylene-propylene rubber); A silicone impact modifier, or a combination thereof.
Aspect 10. The composition of any one of aspects 1-9, wherein the composition further comprises a flame retardant additive.
Aspect 11. The composition of aspect 10, wherein the flame retardant additive comprises a phosphorus-containing flame retardant.
Aspect 12. The composition of aspect 10, wherein the flame retardant additive comprises bisphenol A bis(diphenyl phosphate) (BPADP), resorcinol bis(diphenyl phosphate) (RDP), triphenyl phosphate (TPP), melamine polyphosphate (MPP), phosphazene, polyphosphonate, or a combination thereof.
Aspect 13. The composition of any one of aspects 1-12, wherein the composition further comprises an additional additive comprising a pigment, a processing additive, a flow promoter, a de-molding agent, a thermal stabilizer, a light stabilizer, a UV-resistant additive, a UV absorbent additive, a flame anti-dripping agent, or a combination thereof.
Aspect 14. An article formed from the composition of any one of aspects 1-13.
Aspect 15. The article according to aspect 14, wherein the article is a component of electronic packaging.
Aspect 16. A composition comprising: from about 30 wt. % to 90 wt. % of polymer component comprising a polycarbonate polymer or a polycarbonate and polyester polymer blend; from 0 wt. % to 10 wt. % of a dispersing agent; from about 0.01 wt. % to 5 wt. % of a glycidyl group copolymer; and from about 0.5 wt. % to 30 wt. % of an electrically conductive carbon black; wherein the composition exhibits a lower surface resistivity compared to a reference composition in the absence of the dispersing agent and glycidyl group copolymer when tested in accordance with ANSI/ESD STM11.13 at room temperature; wherein the combined weight percent value of all components does not exceed 100 wt. %, and all weight percent values are based on the total weight of the composition.
Aspect 17. The composition of any one of aspects 1-16, the composition exhibits a surface resistivity that is at least 1%, at least 5%, at least 10%, or at least 20% less than the surface resistivity of a reference composition in the absence of the dispersing agent and/or glycidyl group copolymer when tested in accordance with ANSI/ESD STM11.13 at room temperature.
Aspect 18. A composition comprising: from about 30 wt. % to 90 wt. % of polymer component comprising a polycarbonate polymer or a polycarbonate and polyester polymer blend; from about 1 wt. % to 10 wt. % of a dispersing agent; from about 0.01 wt. % to 5 wt. % of a glycidyl group copolymer; and from about 0.5 wt. % to 30 wt. % of an electrically conductive carbon black; wherein the composition exhibits a surface resistivity that is at least 1%, at least 5%, at least 10%, or at least 20% less than the surface resistivity of a reference composition in the absence of the dispersing agent and/or glycidyl group copolymer when tested in accordance with ANSI/ESD STM11.13 at room temperature; wherein the combined weight percent value of all components does not exceed 100 wt. %, and all weight percent values are based on the total weight of the composition.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (for example, amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

Various compositions samples were prepared from the materials presented in Table 1.

**Table 1. Raw Materials.**

| **Component** | **Chemical description** | **CAS** |
|---|---|---|
| High flow ductile (HFD) polycarbonate PC, high Mw (58,000 -75,000 g/mol) | Sebacic acid/BPA/paracumyl phenol (PCP) polyestercarbonate; | 137397-37-6 |
| HFD PC, low Mw (15,000 - 58,000 g/mol) | Sebacic acid/BPA/PCP polyestercarbonate | 137397-37-6 |
| PC1: PC LEXAN^{™} ML5721 high Mw (30K Mw) | Polycarbonate derived from bisphenol A; PC LEXAN^{™}ML5721 high Mw (30K Mw) | 111211-39-3 |
| PC2: PC LEXAN^{™}ML5221 low Mw (22K Mw) | Polycarbonate derived from bisphenol A; PC LEXAN^{™} ML5221 low Mw (22K Mw) | 111211-39-3 |
| PC3: PC 102X (High Mw), low fries | Low Fries PC 102X, FG102L-11204-0-40BD; PC 102X (High Mw), low fries | 111211-39-3 |
| PC4: PC 172X (Low Mw), low fries | Low Fries PC 172X, FG172L-11204-0-40BD; PC 172X (Low Mw), low fries | 111211-39-3 |
| Paraloid EXL^{™} 3330 | Butyl acrylate based acrylic polymer impact modifier; ACRYLIC POLYMER IMPACT MODIFIER | 25852-37-3, 471-34-1 |
| CCB | Conductive carbon powder; density 0.2 g/cc, Surface area 65 m²/g (BET Nitrogen Surface Area, ASTM D3037-89), OAN 190 ml/100 g (ASTM D2414-01); volume resistivity =10 ohm-cm; ENSACO 250G | 1333-86-4 |
| PETS | PENTAERYTHRITOL TETRASTEARATE | 115-83-3 |
| HDPE | High density polyethylene | 9002-88-4 |
| EGMA | Ethylene-co-glycidyl methacrylate) EGMA, LOTADER^{™} AX8840; random copolymer of ethylene and glycidyl methacrylate | 26061-90-5 |
| STAB1 PHOSPHITE STABILIZER | Tris(di-t-butylphenyl)phosphite, secondary antioxidant, phosphite stabilizer, Irgafos^{™} 168 | 31570-04-4 |

Formulations are presented in Table 2 showing comparative samples C1 through C4 and inventive samples E1 and E2

**Table 2. Samples C1 through C4 and Inventive Samples E1 and E2**

| **Item Description** | **Unit** | **C1** | **C2** | **C3** | **E1** | **C4** | **E2** |
|---|---|---|---|---|---|---|---|
| Low Fries PC 102X, FG 102L-11204-0-40BD | % | 16.96 | 16.9 | 16.96 | 16.9 | 17.1 | 17.04 |
| Low Fries PC 172X, FG 172L-11204-0-40BD | % | 67.84 | 67.6 | 67.84 | 67.6 | 68.4 | 68.16 |
| HDPE | % | | | 2 | 2 | 2 | 2 |
| ACRYLIC POLYMER IMPACT MODIFIER (EXL^{™} 3330) | % | 2 | 2 | | | | |
| LOTADER^{™} AX8840 | % | | 0.3 | | 0.3 | | 0.3 |
| Conductive carbon powder | % | 13.2 | 13.2 | 13.2 | 13.2 | 12.5 | 12.5 |
| Total | % | 100 | 100 | 100 | 100 | 100 | 100 |
| Test | | | | | | | |
| MVR-Avg (300 °C /5kg/360s) | cm³/10 min | 38.2 | 32 | 46 | 29.3 | 49.3 | 32.1 |
| STM 11.13 Surface Resistivity -Avg | LOG OHM-P-SQ | 6.61 | 6.44 | 5.6 | 5.35 | 6.61 | 6.07 |
| STM 11.13 Surface Resistance -Avg | LOG OHM | 6.23 | 6.07 | 5.22 | 4.97 | 6.23 | 5.69 |
| Notched Izod Impact Strength-Avg (RT/N/51bf/ft) | J/m | 69.6 | 72.2 | 53.7 | 73.4 | 51.3 | 65.5 |
| Unnotched Izod Impact Strength-Avg | J/m | 2120 | 2120 | 2120 | 2120 | 2050 | 2120 |

Comparative samples C1 and C2 show that the introduction of the glycidyl group copolymer reduces the surface resistivity for samples having 13.2 wt. % conductive carbon black. However, these samples do not include a dispersing agent such as HDPE. Comparing C4 and E1, also at 13.2 wt. % conductive carbon black, E2, which includes the dispersing agent HDPE and glycidyl group component LOTADER^{™} AX8840 has the lower surface resistivity. Comparing C4 and E2, where the conductive carbon black is reduced to 12.5 wt. %, sample E2 has the lower surface resistivity. These samples demonstrate that at the same conductive carbon black content, the presence of the glycidyl group copolymer or the glycidyl group copolymer *and* dispersing agent, surface resistivity may be reduced.

Further formulations are presented in Table 3. As demonstrated above, electrical conductivity was improved as evidenced by a lower surface resistivity and resistance for samples that featured the dispersing agent or reactive glycidyl copolymer or featured both the dispersing agent and reactive glycidyl copolymer (where the concentration of conductive carbon black is the same).

**Table 3. Samples E3-E6 and C5**

| **Item Description** | **Unit** | **E3** | **E4** | **E5** | **C5** | **E6** |
|---|---|---|---|---|---|---|
| Polycarbonate derived from bisphenol A (30K Mw) | % | 15 | 15 | 15 | 15 | 15 |
| Low Fries PC 102X, FG102L-11204-0-40BD | % | 46.87 | 46.87 | 44.87 | 48.87 | 46.87 |
| Low Fries PC 172X, FG172L-11204-0-40BD | % | 20.8 | 19.8 | 19.8 | 20.8 | 20.8 |
| PBT, High Viscosity | % | | 1 | 1 | | |
| HDPE | % | | | 2 | | 2 |
| EGMA, LOTADER^{™} AX8840 | % | 2 | 2 | 2 | | |
| Conductive carbon powder | % | 15 | 15 | 15 | 15 | 15 |
| Tris(di-t-butylphenyl)phosphite, secondary antioxidant, Irgafos^{™} 168 | % | 0.03 | 0.03 | 0.03 | 0.03 | 0.03 |
| Pentaerythritol tetra stearate (PETS) | % | 0.3 | 0.3 | 0.3 | 0.3 | 0.3 |
| Total | % | 100 | 100 | 100 | 100 | 100 |
| Testing | | | | | | |
| MVR-Avg (300C/5kg/360s) | cm³/10 min | 3.6 | 5.2 | 4.2 | 15.4 | 25 |
| STM11.13 Surface Resistivity -Avg | LOG OHM-P-SQ | 4.12 | 3.37 | 3.2 | 5.74 | 4.51 |
| STM11.13 Surface Resistance -Avg | LOG OHM | 3.75 | 3 | 2.82 | 5.37 | 4.14 |
| Density | - | 1.254 | 1.254 | 1.247 | 1.263 | 1.252 |
| Notched Izod Impact Strength-Avg (RT/N/51bf/ft) | J/m | 250 | 282 | 239 | 56 | 54 |
| Unnotched Izod Impact Strength-Avg | J/m | 2170 | 2170 | 2170 | 2120 | 2170 |

Samples E3 and E4 do not include HDPE, but feature LOTADER^{™} AX8840 and have a SR lower than sample C5 which lacks both. Sample E6 includes only HDPE and still reduced the SR compared to sample C5. Sample E5 combines both HDPE and LOTADER^{™} AX8840 and exhibits the lowest SR among these samples, further demonstrating the synergistic effect among the components.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A composition comprising:
a. from about 30 wt. % to 90 wt. % of polymer component comprising a polycarbonate polymer or a polycarbonate and polyester polymer blend;
b. from about 1 wt. % to 10 wt. % of a dispersing agent;
c. from about 0.01 wt. % to 5 wt. % of a glycidyl group copolymer; and
d. from about 0.5 wt. % to 30 wt. % of an electrically conductive carbon black;
wherein the composition exhibits a lower surface resistivity compared to a reference composition in the absence of the dispersing agent and glycidyl group copolymer when tested in accordance with ANSI/ESD STM11.13 at room temperature;
wherein the combined weight percent value of all components does not exceed 100 wt. %, and all weight percent values are based on the total weight of the composition.

2. The composition of claim 1, wherein the polymer component comprises a polycarbonate and polyester polymer blend and the polyester is present in the composition with an amount of from about 0.01 wt. % to about 20 wt. %.

3. The composition of any one of claims 1-2, wherein the polymer component comprises a bisphenol A polycarbonate, a polyester carbonate copolymer, a polycarbonate-polysiloxane copolymer or a combination thereof.

4. The composition of any one of claims 1-2, wherein the polymer component comprises a poly(aliphatic ester)-polycarbonate copolymer comprising soft block aliphatic dicarboxylic acid ester units.

5. The composition of any one of claims 1-4, wherein the polymer component further comprises a polyalkylene terephthalate polymer.

6. The composition of any one of claims 1-5, wherein the dispersing agent comprises a polyethylene, a polyethylene wax, a paraffin wax, an ethylene-propylene copolymer, an ethylene acrylate copolymer, an ethylene based olefin copolymer, or a combination thereof.

7. The composition of any one of claims 1-5, wherein the glycidyl group copolymer comprises ethylene-co-glycidyl methacrylate, ethylene-methyl acrylate with glycidyl methacrylate, ethylene/butyl acrylate/glycidyl methacrylate copolymer, or a combination thereof.

8. The composition of any one of claims 1-7, wherein the electrically conductive carbon powder has a BET specific surface area (SSA) of at least 50 (m²/g) or an oil absorption number (OAN) as determined according to ASTM D2414 of at least 100 (mL/100g).

9. The composition of any one of claims 1-8, wherein the composition further comprises an impact modifier comprising: an ACR (acrylic rubber) type of impact modifier; an MBS (methylmethacrylate-butadiene-styrene terpolymer) type of impact modifier; an SBS (styrene butadiene styrene) or SEBS (styrene-ethylene-butylene-styrene) type of impact modifier; a polyester ether elastomer; EPR (ethylene-propylene rubber); a silicone impact modifier; or a combination thereof.

10. The composition of any one of claims 1-9, wherein the composition further comprises a flame retardant additive.

11. The composition of claim 10, wherein the flame retardant additive comprises a phosphorus-containing flame retardant.

12. The composition of claim 10, wherein the flame retardant additive comprises bisphenol A bis(diphenyl phosphate) (BPADP), resorcinol bis(diphenyl phosphate) (RDP), triphenyl phosphate (TPP), melamine polyphosphate (MPP), phosphazene, polyphosphonate, or a combination thereof.

13. The composition of any one of claims 1-12, wherein the composition further comprises an additional additive comprising a pigment, a processing additive, a flow promoter, a de-molding agent, a thermal stabilizer, a light stabilizer, a UV-resistant additive, a UV absorbent additive, a flame anti-dripping agent, or a combination thereof.

14. An article formed from the composition of any one of claims 1-13.

15. The article according to claim 14, wherein the article is a component of electronic packaging.
